# EUROPEAN PATENT APPLICATION

(11) **EP 3 809 602 A1**
(43) Date of publication of application: **21.04.2021**
(21) Application number: 18923418.0
(22) Date of filing: 18.06.2018
(51) Int. Cl.: H04B 7/022, H04W 28/18

(54) **USER TERMINAL AND WIRELESS COMMUNICATION METHOD**

(71) Applicant: NTT DOCOMO, INC., Chiyoda-ku, Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/023130
(87) International publication number: WO 2019/244207

(57) **Abstract**

In order to appropriately control repetitive transmission of a UL signal or a UL channel when performing the repetitive transmission of the UL signal or the UL channel to one or more TRPs, a user terminal according to one aspect of the present disclosure includes: a transmitting section that transmits an uplink shared channel to one or more transmission and reception points per given number of repetitions; and a control section that controls repetitive transmission of the uplink shared channel based on at least one of a quasi co-location, a transmission configuration indication (TCI) state, a sounding reference signal indicator (SRI), and spatial relation information corresponding to the given number of repetitions or a redundancy version of the uplink shared channel.

## Description

### Technical Field

The present disclosure relates to a user terminal and a radio communication method in next-generation mobile communication systems.

### Background Art

In the UMTS (Universal Mobile Telecommunications System) network, the specifications of Long Term Evolution (LTE) have been drafted for the purpose of further increasing high speed data rates, providing lower delays and so on (see Non-Patent Literature 1). Further, for the purpose of further increasing the capacity and sophistication of LTE (LTE Rel. 8, 9), LTE-A (LTE Advanced, LTE Rel. 10, 11, 12, 13) have been drafted.

The succeeding systems of LTE (which are also referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14" or "LTE Rel. 15 or later versions," and so on) are also under study.

In the existing LTE system (for example, LTE Rel. 8 to Rel. 14), a user terminal (user equipment (UE)) controls reception of the downlink shared channel (for example, physical downlink shared channel (PDSCH)) based on downlink control information (DCI, also referred to as DL assignment, etc.) transmitted through a downlink control channel (for example, physical downlink control channel (PDCCH)). Also, the user terminal controls transmission of the uplink shared channel (for example, physical uplink shared channel (PUSCH)) based on the DCI (also referred to as UL grant).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR, 5G, 5G+ or Rel. 15 or later versions), it is under study to perform communication using beam forming (BF). Therefore, it is under study for the user terminal to control reception processing (for example, at least one of demapping, demodulation, and decoding) of channel/signal based on information (Quasi-Co-Location (QCL) information) regarding QCL of at least one (channel/signal) of a given channel and signal.

The QCL information of the given channel/signal (for example, PDSCH, PDCCH, and so on) is also referred to as a transmission configuration indication (TCI: Transmission Configuration Indication or Transmission Configuration Indicator) state (TCI state) of the given channel/signal.

By the way, in the future radio communication systems described above, it is under study to repetitively transmit the uplink shared channel (for example, PUSCH). Also, in the repetitive transmission, it is also under study to transmit the uplink shared channel to one or more (one or a plurality of) transmission and reception points (TRPs) for each given number of repetitions (for example, one repetition).

However, when transmitting the uplink shared channel (or UL data) to one or more TRPs every given number of repetitions, it has not been sufficiently studied how to control the transmission of the uplink shared channel. If the repetitive transmission of the uplink shared channel to one or more TRPs cannot be appropriately performed, a communication quality may be deteriorated.

In view of this, the present disclosure has one object to provide a user terminal and a radio communication method that enable appropriate controlling repetitive transmission of a UL signal or a UL channel when performing the repetitive transmission of the UL signal or the UL channel to one or more TRPs.

### Solution to Problem

A user terminal according to one aspect of the present disclosure includes: a transmitting section that transmits an uplink shared channel to one or more transmission and reception points per given number of repetitions; and a control section that controls repetitive transmission of the uplink shared channel based on at least one of a quasi co-location, a transmission configuration indication (TCI) state, a sounding reference signal indicator (SRI), and spatial relation information corresponding to the given number of repetitions or a redundancy version of the uplink shared channel.

### Advantageous Effects of Invention

According to one aspect of the present disclosure, it is possible to appropriately control repetitive transmission of a UL signal or a UL channel when performing the repetitive transmission of the UL signal or the UL channel to one or more TRPs.

### Brief Description of Drawings

Figs. 1A and 1B are diagrams to show an example of repetitive transmission of channel/signal using a plurality of TRPs.
Figs. 2A and 2B are diagrams to show an example of a TCI state associated with a repetition index according to a first aspect.
Figs. 3A and 3B are diagrams to show an example of a TCI state associated with an RV index p according to the first aspect.
Fig. 4A is a diagram to show an example of DCI indicating a TCI state ID for each repetition index k. Fig. 4B is a diagram to show an example of DCI indicating a TCI state ID for each RV index p.
Fig. 5 is a diagram to show an example of DCI indicating a single TCI state ID.
Figs. 6A to 6D are diagrams to show an example of a relationship between a TCI state indicated by a TCI field and an RV indicated by an RV field.
Fig. 7 is a diagram to show an example of a CG configuration applied to repetitive transmission of a PUSCH based on a configured grant.
Fig. 8 is a diagram to show an example of PUSCH resources applied to repetitive transmission of a PUSCH based on a configured grant.
Fig. 9 is a diagram to show another example of a CG configuration applied to repetitive transmission of a PUSCH based on a configured grant.
Fig. 10 is a diagram to show an example of a schematic structure of a radio communication system according to the present embodiment.
Fig. 11 is a diagram to show an example of an overall structure of a radio base station according to the present embodiment.
Fig. 12 is a diagram to show an example of a functional structure of the radio base station according to the present embodiment.
Fig. 13 is a diagram to show an example of an overall structure of a user terminal according to the present embodiment.
Fig. 14 is a diagram to show an example of a functional structure of the user terminal according to the present embodiment.
Fig. 15 is a diagram to show an example of a hardware structure of the radio base station and the user terminal according to the present embodiment.

### Description of Embodiments

In future radio communication systems, it is under study to repetitively transmit at least one (channel/signal) of a channel and a signal. To be more specific, it is under study to repetitively transmit a channel/signal using a plurality of transmission and reception points (TRPs).

The channel/signal is, for example, a PDSCH, a PDCCH, a PUSCH, a PUCCH, a DL-RS, an uplink reference signal (UL-RS), or the like, but is by no means limited to these.

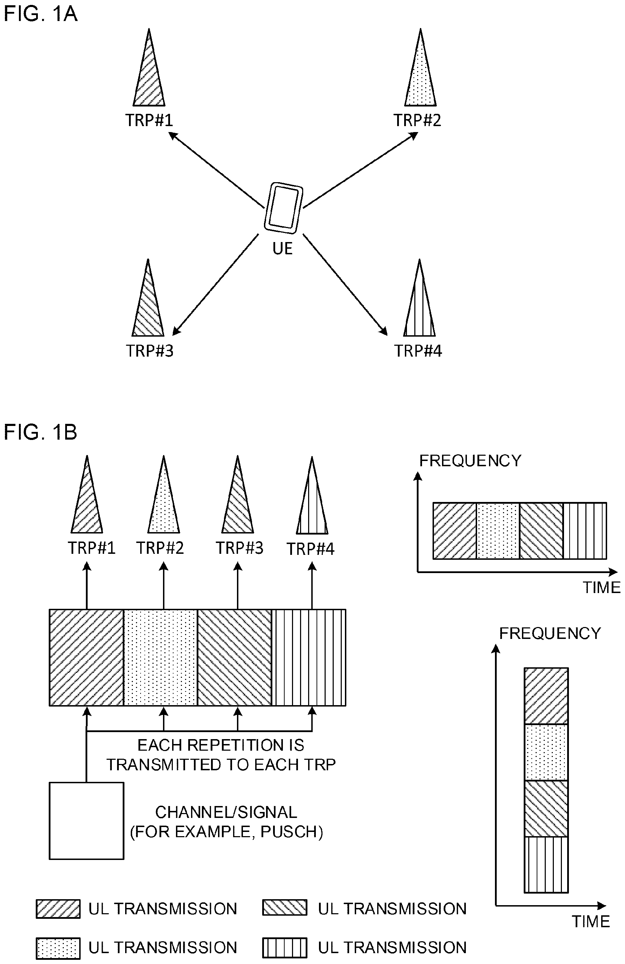

Figs. 1A and 1B are diagrams to show an example of repetitive transmission of channel/signal using a plurality of TRPs. For example, Figs. 1A and 1B show an example of repetitive transmission of a PUSCH using TRP#1 to TRP#4. Note that Fig. 1A shows an example in which TRP#1 to TRP#4 have different geographical positions (TCI state or quasi co-location), but this is by no means limited to this. TRP#1 to TRP#4 may be different antenna panels installed at the same transmission location. Also, the number of TRPs used for repetitive transmission is not limited to that shown in Fig. 1A.

As shown in Fig. 1B, the same PUSCH (or UL data) may be copied a plurality of times and the PUSCH may be transmitted repetitively. The plurality of copies as described above may be an information bit sequence, a code block, a transport block, or a codeword sequence after encoding, that is repetitively transmitted by the PUSCH. Alternatively, the plurality copies do not necessarily represent the same bit string, but may be a part of a codeword generated from the same information bit string or a part of a modulated symbol sequence. For example, each of the plurality of copies may be a different RV or the same RV of a codeword obtained by encoding a certain information bit sequence. Alternatively, each of the plurality of copies may be a modulated symbol sequence obtained by modulating the different RV or the same RV. Also, each of the plurality of copies is transmitted as the PUSCH. The PUSCH may be repetitively transmitted in resources in which at least one of a time domain and a frequency domain is different.

For example, as shown in Fig. 1B, the PUSCH may be repeated in resources (for example, one or more slots) that have the same frequency domain and are continuous in the time domain. Alternatively, the PUSCH may be repeated in resources (for example, one or more resource blocks (RBs) or an RB group (RBG) including one or more RBs) that have the same time domain and are continuous in the frequency domain. Each repetition may be transmitted to a different TRP.

Note that Fig. 1 shows a case where a plurality of resources corresponding to different repetitions are shown to be continuous in the time domain or the frequency domain, respectively, but the plurality of resources corresponding to the different repetitions may not be continuous in the time domain or the frequency domain. Also, the plurality of resources may be resources different in both the time domain and the frequency domain.

Also, Fig. 1 shows a case where the PUSCH is transmitted to one or more TRPs per one repetition, but this is by no means limiting, and the PUSCH may be transmitted to one or more TRPs per given number of repetitions (one or more repetitions).

Note that the "TRP" may also be referred as a network, a radio base station, an antenna device, an antenna panel, a serving cell, a cell, a component carrier (CC), a carrier, or the like. Also, with respect to different transmission/reception signals or channels, "TRP is the same" may also be referred as TCI state, QCL, or QCL relationship is the same between different transmission/reception signals or channels or between their reference signals. Also, with respect to different transmission/reception signals or channels, "TRP is different" may also be referred as TCI state, QCL, or QCL relationship is different between different transmission/reception signals or channels or between their reference signals.

### <QCL>

A QCL (Quasi-Co-Location) is a property indicating statistical properties of channels/signals, and is also called a quasi co-location. A user terminal (UE) may control reception processing or transmission processing of channel/signal based on information (QCL information) regarding a QCL of at least one (channel/signal) of a given channel and signal. The reception processing corresponds to, for example, at least one of demapping, demodulation, and decoding. The transmission processing corresponds to at least one of mapping, modulation, and encoding.

For example, when one signal and another signal have a QCL relationship therebetween, it may mean that it can be assumed that at least one of a Doppler shift, a Doppler spread, an average delay, and a delay spread, and a spatial parameter (for example, a spatial reception parameter (Spatial Rx Parameter)) is the same (is QCLed for at least one of these) between a plurality of such different signals.

Note that the spatial reception parameter may correspond to a reception beam (for example, a reception analog beam) of the user terminal, or a transmission beam (for example, a transmission analog beam), and may be specified based on a spatial QCL. In the present disclosure, the QCL and at least one element of the QCL may be interpreted as an sQCL (spatial QCL).

For the QCL, plural types (QCL types) may be defined. For example, four QCL types A to D with different parameters (or parameter sets) that can be assumed to be the same may be provided, and the parameters are shown below:
- QCL type A: Doppler shift, Doppler spread, average delay, and delay spread,
- QCL Type B: Doppler shift and Doppler spread,
- QCL type C: Doppler shift and average delay, and
- QCL type D: spatial reception parameter.

A transmission configuration indication (TCI: Transmission Configuration Indication or Transmission Configuration Indicator) state (TCI state) may indicate the QCL information of a given channel/signal (for example, PDSCH, PDCCH, PUCCH, or PUSCH).

The TCI state is identified by a given identifier (TCI state ID (TCI-StateId)), and may indicate (include) information regarding the QCL (QCL information (QCL-Info)) between a target channel/signal (or a reference signal for the channel (or an antenna port of the reference signal)) and another signal (for example, another Downlink Reference Signal (DL-RS) or Uplink Reference Signal (UL-RS)).

The QCL information may include, for example, at least one of information (RS relation information) regarding a DL-RS or a UL-RS (hereinafter, also simply referred to as an RS) having a QCL relationship with the target channel/signal, information (QCL type information) indicating the above-described QCL type, and information regarding a carrier (cell) in which the RS is arranged and a BWP.

The RS relation information may include information indicating at least one of the RS having the QCL relationship with the target channel/signal and a resource of the RS. For example, when the user terminal is configured with a plurality of reference signal sets (RS sets), the RS relation information may indicate at least one of an RS having a QCL relationship with a channel (or a port for the channel) among RSs included in the RS set, a resource for the RS, and the like.

The DL-RS may be, for example, at least one of a synchronization signal (SS), a broadcast channel (PBCH: Physical Broadcast Channel), a synchronization signal block (SSB), a Mobility RS (MRS), a channel state information-reference signal (CSI-RS), a CSI-RS for tracking, a beam-specific signal, and the like, or a signal (for example, a signal formed by changing at least one of a density and a cycle) formed by expanding, changing or the like, of these signals.

The synchronization signal may be, for example, at least one of a primary synchronization signal (PSS) and a secondary synchronization signal (SSS). The SSB is a signal block including a synchronization signal and a broadcast channel, and may be referred to as an SS/PBCH block or the like.

The UL-RS may be, for example, a sounding reference signal (SRS).

When the PUSCH is transmitted to different TRPs per given number of repetitions as shown in Figs. 1A and 1B above, it is a problem how to control the repetitive transmission of the PUSCH to the different TRPs. If the repetitive transmission of the PUSCH to a plurality of TRPs cannot be appropriately performed, a communication quality may be deteriorated.

In view of this, the inventors of the present invention have come up with the idea of being capable of appropriately controlling the transmission of the PUSCH even when the UE repetitively transmits the PUSCH to the plurality of TRPs, by associating the TCI state (or quasi co-location, sounding reference signal (SRS) resource indicator (SRI), or spatial relation information) with the repetitions of the PUSCH or a redundancy version (RV) of the PUSCH.

Further, a future radio communication system supports configured grant-based transmission that transmits the PUSCH without using DCI for scheduling the PUSCH. When the PUSCH is repetitively transmitted to the plurality of TRPs based on the configured grant-based transmission, it is a problem how to control the repetitive transmission of the PUSCH.

In view of this, the inventors of the present invention have come up with the idea of being capable of appropriately controlling the transmission of the PUSCH even when the UE repetitively transmits the PUSCH based on the configured grant to the plurality of TRPs, by associating the TCI state (or quasi co-location or spatial relation information) with a configuration for the configured grant-based transmission.

Now, the present embodiment will be described below in detail with reference to the drawings. In the following, a case where the PUSCH is transmitted to a different TRP per one repetition will be described as an example, but the PUSCH may be transmitted to a different TRP per given number of repetitions (one or more repetitions). Note that, in the following description, repetitive transmission of the PUSCH is taken as an example, but the same may be applied to a UL signal or a UL channel other than the PUSCH.

### (First Aspect)

In a first aspect, transmission of a PUSCH is controlled based on at least one of a quasi co-location, a TCI state, an SRS resource indicator (SRI), and spatial relation information associated with a given number of repetitions (for example, one repetition) of the PUSCH. Further, a UE may assume that one or more antenna ports of a DMRS of the PUSCH are quasi co-located with an RS indicated by the quasi co-location, the TCI state, SRI, or the spatial relation information.

First, a TCI state/SRI and spatial relation information for the PUSCH will be described.

### <TCI State/SRI for PUSCH>

The TCI state or SRI for the PUSCH (hereinafter, also referred to as TCI state/SRI) may include QCL information regarding the QCL of the PUSCH. To be more specific, the TCI state/SRI may include QCL information regarding a QCL between a demodulation reference signal (DMRS) of the PUSCH (antenna ports of the DMRS (DMRS port) or a group of the DMRS ports (DMRS port group)) and a given RS (for example, SSB, CSI-RS, TRS (Tracking Reference Signal), SRS, and so on). Generally, the TCI state is a case where the given RS is the SSB, the CSI-RS, or the TRS in the above, and the SRI is a case where the given RS is the SRS in the above.

The UE may be notified (configured) of M (M ≥ 1) TCI states for the PUSCH (M QCL information for the PUSCH) or M SRS resources by higher layer signaling. Note that the number M of TCI states or SRS resources configured in the user terminal may be limited by at least one of capability of the user terminal (UE capability) and the QCL type.

DCI used for scheduling the PUSCH or DCI used for activation of the configured grant-based transmission may include a given field (that may be referred to as for example, a field for a TCI, a TCI field, a TCI state field, etc.) indicating the TCI state (QCL information for the PUSCH) or a given field (for example, an SRS resource identifier (SRI)) indicating the SRS resource. The DCI may be referred to as, for example, UL DCI, DCI format 0_0, DCI format 0_1, or the like.

When the DCI includes a TCI field or an SRI of x bits (for example, x = 3), the user terminal may be configured with at most 2x (for example, 8 when x = 3) types of TCI states in advance using higher layer signaling by a base station. A value of the TCI field (TCI field value) or a value of the SRI field (SRI field value) in the DCI may indicate one of a TCI state or an SRS resource configured in advance by higher layer signaling.

When the user terminal is configured with more than eight types of TCI states or SRS resources, eight or less types of TCI states or SRS resources may be activated (designated) using a MAC CE. The value of the TCI field or the SRI field in the DCI may indicate one of the TCI states or the SRS resources activated by the MAC CE.

The user terminal may determine the QCL regarding the PUSCH based on the TCI state indicated by the TCI field value in the DCI. To be more specific, the user terminal may control transmission processing (for example, encoding, modulation, and so on) of the PUSCH on the assumption that the DMRS (DMRS ports or DMRS port group) of the PUSCH is an RS and a QCL corresponding to the TCI state notified by the DCI. Alternatively, the user terminal may determine the QCL regarding the PUSCH based on the SRS resources indicated by the SRI field value in the DCI. To be more specific, the user terminal may control transmission processing (for example, encoding, modulation, and so on) of the PUSCH on the assumption that the DMRS (DMRS ports or DMRS port group) of the PUSCH is an SRS and a QCL corresponding to the SRI field value notified by the DCI.

### <Spatial Relation Information>

The spatial relation information for the PUSCH corresponds to information indicating a configuration of spatial association between a reference RS and the PUSCH. For example, a plurality of candidate beams for PUSCH transmission may be configured by PUSCH spatial relation information (PSCCH Spatial Relation Information). The PUSCH spatial relation information is notified to the UE by a higher layer (for example, RRC signaling).

The PUSCH spatial relation information may include at least one entry (PUCCH spatial relation information IE (Information Element)). Each entry may indicate an ID associated with the reference RS. To be more specific, each entry may include at least one of an SSB index, a non-zero power (NZP)-CSI-RS resource configuration ID, and an SRS resource configuration ID. The SSB index, the NZP-CSI-RS resource configuration ID, and the SRS resource configuration ID may be associated with a beam, a resource and/or a port selected by measurement of the reference RS.

One of a plurality of entries (candidate beams or PUSCH spatial relation information) may be indicated by the MAC CE. This MAC CE may be referred to as spatial information MAC CE. The spatial information MAC CE may indicate an index of an entry used for PUSCH transmission. When the PUSCH spatial relation information includes one PUSCH spatial relation information IE, the MAC CE may not be used.

When one entry is determined, the UE may transmit the PUSCH based on PUSCH spatial relation information associated with that entry. When the reference RS is a downlink RS (SSB or CSI-RS), the entry may be associated with a reception beam selected based on measurement of the reference RS, and the UE may transmit the PUSCH using a transmission beam corresponding to the reception beam associated with the entry. Alternatively, a base station receiver may transmit the PUSCH using a transmission beam, a precoding, an antenna port, an antenna panel and so on that can assume a downlink RS (SSB or CSI-RS) and a spatial QCL (Quasi Co-Location) associated with the entry.

When the reference RS is an uplink RS (SRS), the entry may be associated with a transmission beam selected based on measurement of the reference RS, and the UE may transmit the PUSCH using the transmission beam associated with the entry. Alternatively, the base station receiver may transmit the PUSCH using a transmission beam, a precoding, an antenna port, an antenna panel and so on that can assume an uplink RS (SRS) and a spatial QCL associated with the entry. The PUSCH spatial relation information may be referred to as a PUCCH beam, a transmission beam, an uplink beam, and a beam.

Next, a case where at least one of a quasi co-location, a TCI state, and spatial relation information is associated with a given repetition in the repetitive transmission of the PUSCH will be described. Note that, in the following description, a case where the TCI state is associated with the repetitive transmission will be described, but in the present specification, the TCI state may be replaced with at least one of a quasi co-location, an SRI, and spatial relation information. As an example, in the following description, the TCI state may be replaced with the SRI.

The repetition of the PUSCH may be identified by a given index (repetition index) k. The repetition index k may indicate how many times it is repeated. For example, repetition indices k = 0, 1, 2,..., K-1 may indicate first, second, third,..., K-th repetitions, respectively.

Also, the number of all repetitions of the PUSCH may be referred to as a repetition coefficient K. For example, the repetition coefficient K is set to 2, 4, or 8, but is not limited to this.

At least one of the repetition index k and the repetition coefficient K described above may be transmitted to the user terminal by at least one of higher layer signaling (for example, RRC signaling, MAC CE, etc.) and physical layer signaling (for example, DCI).

When the PUSCH is transmitted to the different TRP per given number of repetitions, the TCI state may be associated with the given number of repetitions (for example, one repetition) or may be associated with the repetition index k indicating the given number of repetitions.

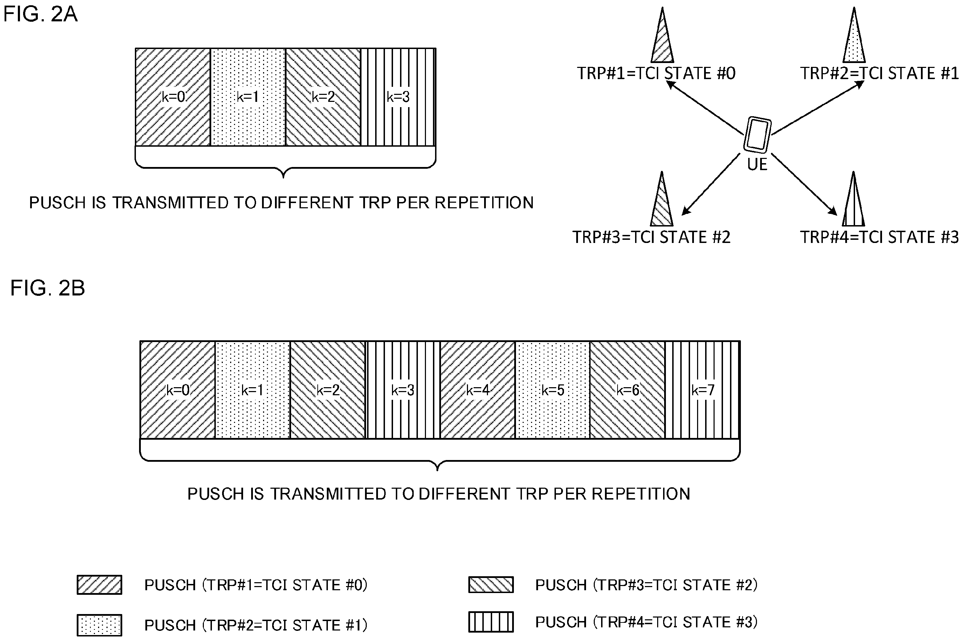

Figs. 2A and 2B are diagrams to show an example of a TCI state associated with a repetition index according to a first aspect. Cases where the repetition coefficient K is 4 and 8 are assumed in Figs. 2A and 2B, respectively, but a value of the repetition coefficient K is not limited to this.

Further, in Figs. 2A and 2B, it is assumed that Y TCI states are configured in the user terminal (notified from the TRP) by higher layer signaling.

As shown in Figs. 2A and 2B, the repetition index k (k = 0, 1, 2,..., K-1) may be associated with a given TCI state identifier (TCI state ID) y. To be more specific, the repetition index k may be associated with the remainder (y mod Y) of the TCI state ID y according to the total number Y of TCI states configured in the user terminal.

For example, in Fig. 2A, repetition indices k = 0, 1, 2, 3 are associated with TCI states IDs y = 0, 1, 2, 3, respectively. Also, PUSCHs of repetition indices k=0, 1, 2, 3 are transmitted to TRPs #1, #2, #3, and #4 corresponding to TCI state IDs y = 0, 1, 2, 3, respectively.

Also, in Fig. 2B, repetition indices k = 0, 1, 2, 3, 4, 5, 6, 7 are associated with TCI state IDs y=0, 1, 2, 3, 0, 1, 2, 3, respectively. Also, PUSCHs of repetition indices k = 0, 1, 2, 3, 4, 5, 6, 7 are transmitted to TRPs #1, #2, #3, #4, #1, #2, #3, #4 corresponding to TCI state IDs y = 0, 1, 2, 3, 0, 1, 2, 3 respectively.

Note that the UE may be configured with a TCI state of the PUSCH (or the DMRS for PUSCH demodulation) corresponding to each repetition by at least one of the RRC signaling, the MAC CE, and the DCI. For example, information indicating the TCI state ID corresponding to the repetition index k may be notified from the base station (or the given TRP) to the user terminal by at least one of the RRC signaling, the MAC CE and the DCI. Alternatively, the user terminal may derive the TCI state ID corresponding to the repetition index k based on the repetition index k, the total number of TCI states Y described above, and so on.

Also, in Figs. 2A and 2B, a different TCI state ID (TRP) is associated with each repetition index k, but this is by no means limiting. At least some repetitions in the repetition coefficient K may be associated with different TCI state IDs (TRPs). That is, at least some repetitions in the repetition coefficient K may be associated with the same TCI state (TRP).

Also, in Figs. 2A and 2B, an RV (value of RV index p) of each repetition in the repetition coefficient K may be fixed or may be cyclic in a given order.

In the first aspect, since the TCI state and the repetition (or the repetition index k) of the PUSCH are associated with each other, even when the UE transmits the PUSCH to the different TRP per given number of repetitions, the transmission of the PUSCH can be appropriately controlled.

### (Second Aspect)

In a second aspect, the user terminal controls transmission of the PUSCH based on the TCI state associated with a redundancy version (RV) of the PUSCH. The second aspect will describe mainly differences from the first aspect.

The redundancy version (RV) is used for encoding and rate-matching UL data, and indicates a difference in redundancy of the UL data. A redundancy version value (RV value) is, for example, 0, 1, 2, or 3, and 0 is used for first transmission because a degree of redundancy is the lowest. By applying a different RV value per transmission of UL data with the same HARQ process number (HPN), a probability that the UL data can be normally received (decoded) can be increased and a gain of HARQ can be effectively obtained. The RV may be included in the DCI and notified to the UE. Therefore, inconsistency in recognition of the RV between the base station and the UE can be prevented.

The RV of the PUSCH may be fixed between K repetitions or may be cyclic in a given order (for example, 0→2→3→1). The RV may be identified by a given index (RV index) p.

When transmitting the PUSCH to the different TRP per every given number of repetitions, the TCI state may be associated with the RV or may be associated with the RV index p indicating the RV.

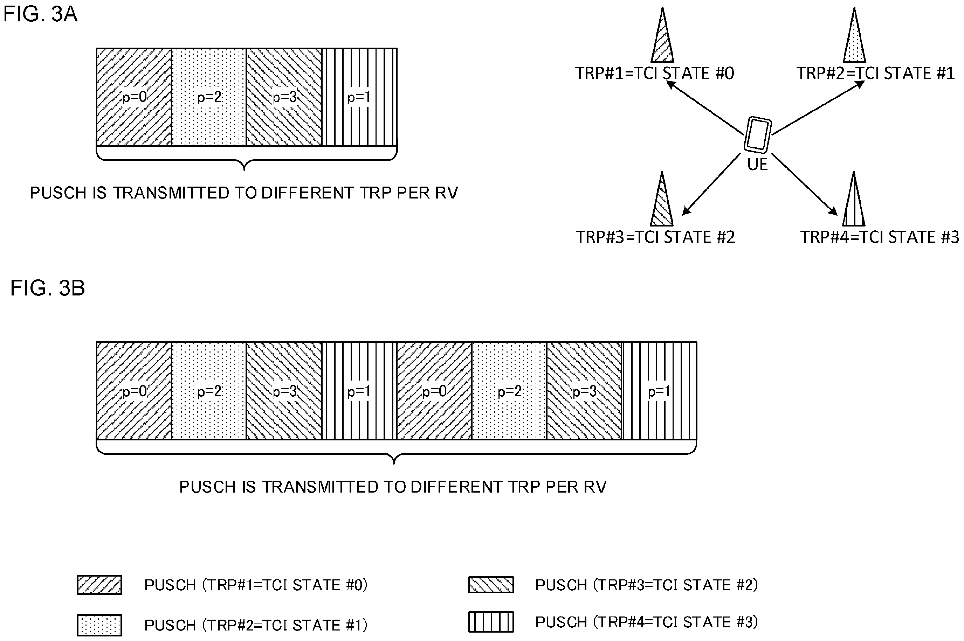

Figs. 3A and 3B are diagrams to show an example of a TCI state associated with the RV index p according to the first aspect. In Figs. 3A and 3B, description of portions similar to those of Figs. 2A and 2B will be omitted, and differences from Figs. 2A and 2B will be mainly described.

As shown in Figs. 3A and 3B, the RV index p may be associated with a given TCI state identifier (TCI state ID) y (or a TCI state of the TCI state ID). For example, the RV index p may be associated with the remainder (y mod Y) of the TCI state IDy according to the total number Y of TCI states configured in the UE.

For example, in Fig. 3A, RV indices p = 0, 2, 3, 1 are associated with TCI states IDs y = 0, 1, 2, 3, respectively. Also, PUSCHs of RV indices p = 0, 2, 3, 1 are transmitted to TRPs #1, #2, #3, and #4 corresponding to TCI state IDs y = 0, 1, 2, 3, respectively.

Also, in Fig.3B, since the RV index is cyclic in a given order (for example, 0→2→3→1), RV indices p of repetition indices k = 0, 1, 2, 3, 4, 5, 6, 7 become p = 0, 1, 2, 3, 0, 1, 2, 3, respectively. In Fig. 3B, PUSCHs of RV indices p = 0, 2, 3, 1 are transmitted to TRPs #1, #2, #3, and #4 corresponding to TCI state IDs y = 0, 1, 2, 3, respectively.

The UE may be configured with a TCI state of a PUSCH (or a DMRS for PUSCH demodulation) corresponding to each RV by at least one of RRC signaling, MAC CE, and DCI. For example, information indicating the TCI state ID corresponding to the RV index p may be notified from a TRP to the user terminal by at least one of higher layer signaling (for example, RRC signaling, MAC CE, etc.) and physical layer signaling (for example, DCI). Alternatively, the user terminal may derive a TCI state ID corresponding to the RV index p based on the RV index p, the total number of TCI states Y described above, and so on.

Also, in Figs. 3A and 3B, a different TCI state ID (TRP) is associated with each RV index p, but this is by no means limiting. At least some RVs in the repetition coefficient K may be associated with different TCI state IDs (TRPs). That is, at least some RVs in the repetition coefficient K may be associated with the same TCI state (TRP).

In the second aspect, since the TCI state and the RV (or the RV index p) are associated with each other, even when the UE transmits the PUSCH to the different TRP per given number of repetitions, the transmission of the PUSCH can be appropriately controlled.

### (Third Aspect)

A third aspect will describe the DCI indicating the TCI state associated with the repetition index k or the RV index p in the first or second aspect. Note that the DCI may be DCI that schedules the PUSCH or may be DCI that instructs activation of configured grant-based transmission.

### <First Example>

The user terminal may receive DCI that schedules (or activates) the PUSCH in all repetitions. A given field value in the DCI may indicate a TCI state per repetition index k or RV index p.

The given field may be referred to as a TCI field, a TCI state field, a field for a TCI state, a first field, and so on. Also, the given field may be included, for example, when given information (for example, tci-PresentInDCI or SRI) is designated by higher layer signaling. Also, the given field may be composed of a given number of bits (for example, 3 bits).

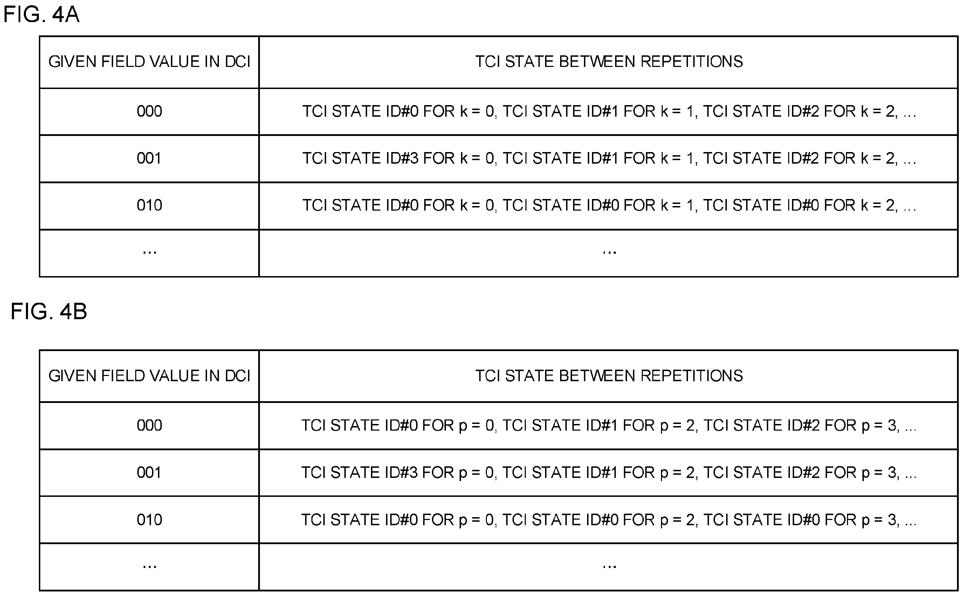

In a first example, the given field value in the DCI may indicate one or more TCI state IDs. Fig. 4A is a diagram to show an example of DCI indicating a TCI state ID for each repetition index k. Fig. 4B is a diagram to show an example of DCI indicating a TCI state ID for each RV index p. Note that Figs. 4A and 4B are merely examples, and the number of bits, the value, the TCI state ID indicated by the value, and so on, of the given field in the DCI are not limited to those shown.

As shown in Fig. 4A, each value of the given field in the DCI may indicate a TCI state ID per repetition index k in the repetition coefficient K. For example, in Fig. 4A, a single value of the given field indicates a TCI state ID of each repetition index k in the repetition coefficient K (for example, a TCI state ID#0 for k=0, a TCI state ID#1 for k=1, TCI state ID#2 for k=2,..., when the value is "000").

On the other hand, as shown in Fig. 4B, each value of the given field in the DCI may indicate a TCI state ID per RV index p in the repetition coefficient K. For example, in Fig. 4B, a single value of the given field indicates a TCI state ID of each RV index p in the repetition coefficient K (for example, a TCI state ID#0 for p = 0, a TCI state ID#1 for p = 2, TCI state ID#2 for p = 3,..., when the value is "000").

As shown in Figs. 4A and 4B, with a single DCI, even when scheduling all repetitions of the PUSCH of the repetition coefficient K, the user terminal can recognize the TCI state per repetition or each RV in the repetition coefficient K based on the given field value in the DCI.

Note that, in a case shown in Figs. 4A and 4B, another field indicating the repetition coefficient K may be included in the DCI. Alternatively, the repetition coefficient K may be indicated by the given field value. For example, the user terminal may determine a value obtained by adding 1 to a maximum value of the repetition index k as the repetition coefficient K.

### <Second Example>

Alternatively, the user terminal may receive DCI that schedules (or activates) the PUSCH per given number of repetitions (for example, one repetition). A given field value in the DCI may indicate the TCI state per the given number of repetitions.

In a second example, the given field value in the DCI may indicate a single TCI state ID. For example, when the DCI is transmitted per repetition index k, a TCI state ID of the repetition index k scheduled by the DCI may be indicated by a given field value in the DCI.

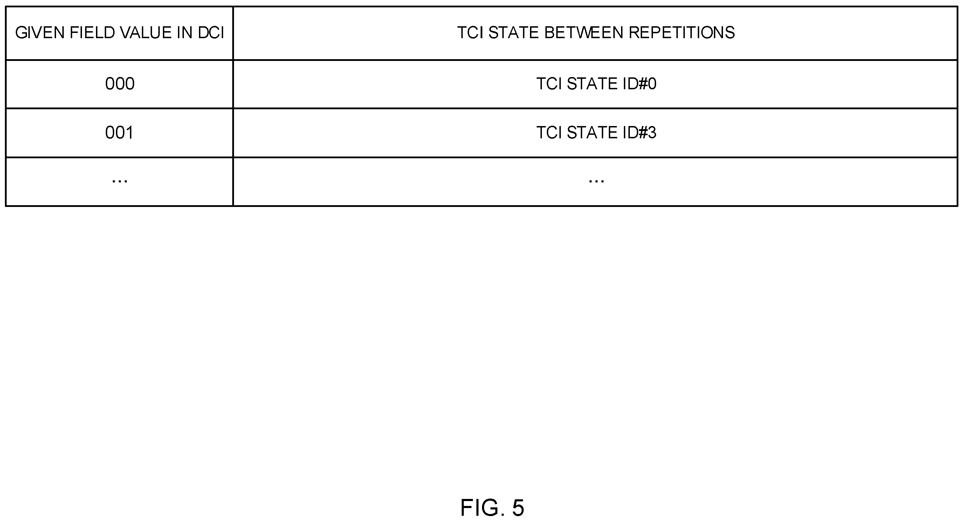

Fig. 5 is a diagram to show an example of DCI indicating a single TCI state ID. For example, in Fig. 5, single DCI may be used for scheduling a PUSCH of a given repetition index k. In this case, a given field in DCI may indicate a TCI state ID of the given repetition index k.

Alternatively, single DCI may be used for scheduling a PUSCH of a given RV index p. In this case, a given field in the DCI may indicate a TCI state ID of the given RV index p.

### <Others>

The DCI may include a given field (which is also referred to as, for example, a second field, an RV field, an RV index field, etc.) indicating an RV index, in addition to the TCI field described above. The RV field may be composed of a given number of bits (for example, 2 bits).

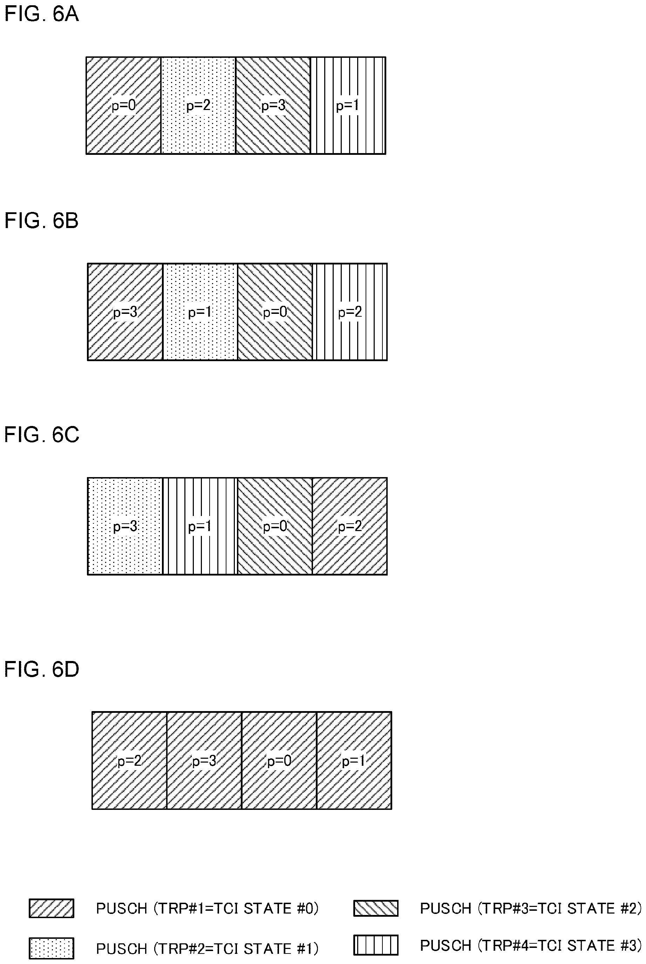

Figs. 6A to 6D are diagrams to show an example of a relationship between a TCI state indicated by a TCI field and an RV indicated by an RV field. For example, Figs. 6A to 6D illustrate a case where the repetition coefficient K is 4, but this is by no means limiting.

Also, in Figs. 6A to 6D, a PUSCH of the repetition coefficient K may be scheduled by single DCI or may be scheduled by DCI per repetition index k.

In Fig. 6A, TCI state IDs = 0, 1, 2, 3 of repetition indices k = 0, 1, 2, 3 may be indicated by values of the TCI field (for example, Figs. 4A and 5) in the DCI. On the other hand, since RV index 0 is indicated by the value of the RV field in the DCI, the RV indices p = 0, 2, 3, 1 of the repetition indices k = 0, 1, 2, 3 may be indicated according to a given order.

In Fig. 6B, a TCI state ID of each repetition index k is indicated as in Fig. 6A. On the other hand, since RV index 3 is indicated by the value of the RV field in the DCI, the RV indices p = 3, 1, 0, 2 of the repetition indices k = 0, 1, 2, 3 may be indicated according to a given order.

In Fig. 6C, TCI state IDs = 1, 3, 2, 0 of repetition indices k = 0, 1, 2, 3 may be indicated by values of the TCI field (for example, Figs. 4A and 5) in the DCI. An RV index of each repetition index k is indicated as in Fig. 6B.

In Fig. 6D, the same TCI state ID = 0 is indicated across the repetition indices k = 0, 1, 2, 3 by a value of the TCI field (for example, Figs. 4A and 5) in the DCI. In addition, since RV index 2 is indicated by the value of the RV field in the DCI, the RV indices p = 2, 3, 1, 0 of the repetition indices k = 0, 1, 2, 3 may be indicated according to a given order.

In this way, the RV index (RV sequence) and the TCI state may not be associated with each other and may be designated by separate fields.

In the third aspect, since the TCI state associated with the repetition or the RV of the PUSCH is indicated by the given field value of the DCI, even when the UE transmits the PUSCH to the different TRP per given number of repetitions, the transmission of the PUSCH can be appropriately controlled.

### (Fourth Aspect)

A fourth aspect will describe a case where a PUSCH is repetitively transmitted to a plurality of transmission points based on a configured grant that performs transmission of the PUSCH without scheduling (or dynamic grant) by DCI. For example, when the UE repetitively performs configured grant-based PUSCH transmission, the UE controls the transmission of the PUSCH using a configuration for configured grant-based transmission associated with a different TRP. The configuration for configured grant-based transmission may be referred to as a CG configuration, a configured grant configuration, a configured grant config, a CG configuration, or a CG config.

Several types (type 1, type 2, or the like) of configured grant-based transmission are being supported. In configured grant type 1 transmission (type 1 PUSCH transmission with configured grant), the parameters used for configured grant-based transmission (which may be referred to as configured grant-based transmission parameter, configured grant parameter, etc.) are configured in the UE using only higher layer signaling.

In configured grant type 2 transmission (type 2 PUSCH transmission with configured grant), the configured grant parameter is configured in the UE by higher layer signaling. In configured grant type 2 transmission, at least some of the configured grant parameters may be notified to the UE by physical layer signaling (for example, activation downlink control information (DCI)).

Further, the configuration for configured grant-based transmission (hereinafter, also referred to as a CG configuration) includes parameters used for configured grant-based transmission. For example, at least one of a resource allocation, a period, and the number (K) of repetitions of the PUSCH used for configured grant-based transmission is included in the CG configuration. Obviously, the parameters included in the CC configuration are not limited to this. The base station may notify the UE of the CG configuration using a higher layer (for example, RRC signaling).

The base station may configure a plurality of CG configurations in the UE for at least one of a given carrier and a bandwidth part (BWP). Further, the base station may instruct the UE to activate one or a plurality of CG configurations of the plurality of CG configurations that are configured, using at least one of DCI and a MAC CE, for the plurality of CG configurations that are configured. The UE may control the configured grant-based PUSCH transmission using one or a plurality of CG configurations configured (or activated) by the base station.

The UE may perform repetitive transmission of the PUSCH based on the configured grant using a plurality of CGs. That is, the PUSCH based on the configured grant is repetitively transmitted using a different CG configuration (CG PUSCH configuration) per given number of repetitions (for example, one repetition).

One or more CG configurations configured for at least one of a given carrier and BWP may be associated with a given TRP. In this case, TCI states of each configured grant-based PUSCH transmission may be configured to be different from each other over repetitive transmission. That is, the repetitive transmission of the PUSCH based on the configured grant is performed using a plurality of CG configurations associated with different TRPs (or TCI states).

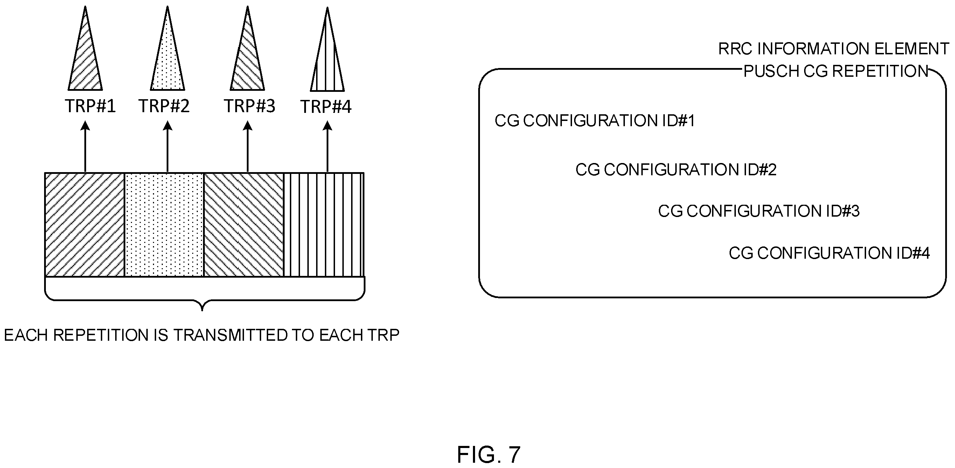

For example, the base station configures a plurality of CG configurations in the UE for at least one of a given carrier and a BWP (see Fig. 7). Here, a case where CG configurations #1 to #4 are configured (or activated) in the UE is shown. Further, at least some of the parameters included in each CG configuration may be configured to be different from each other (or at least some parameters (for example, a period and so on) may be configured to be the same as each other).

The base station may configure how the repetition of the PUSCH is performed, in the UE, over the plurality of CG configurations. For example, a CG configuration index (CG config ID) used for the repetitive transmission may be configured in the UE in a higher layer (for example, RRC signaling) and so on. Fig. 7 shows a case where CG configurations #1 to #4 are applied in given repetitive transmission of a the PUSCH.

CG configurations #1 to #4 may be associated with different TRPs (or TCI states). For example, CG configuration #1 may be configured to be associated with TRP#1 (or TCI state 1), CG configuration #2 may be configured to be associated with TRP#2 (or TCI state 2), CG configuration #3 may be configured to be associated with TRP#3 (or TCI state 3), and CG configuration #4 may be configured to be associated with TRP#4 (or TCI state 4).

As a result, repetitive transmission of the PUSCH can be performed using different CG configurations. Further, by associating a different TCI state with each CG configuration, repetitive transmission of each PUSCH can be transmitted to a different TRP. Note that the same CG structure may be associated with different TRPs.

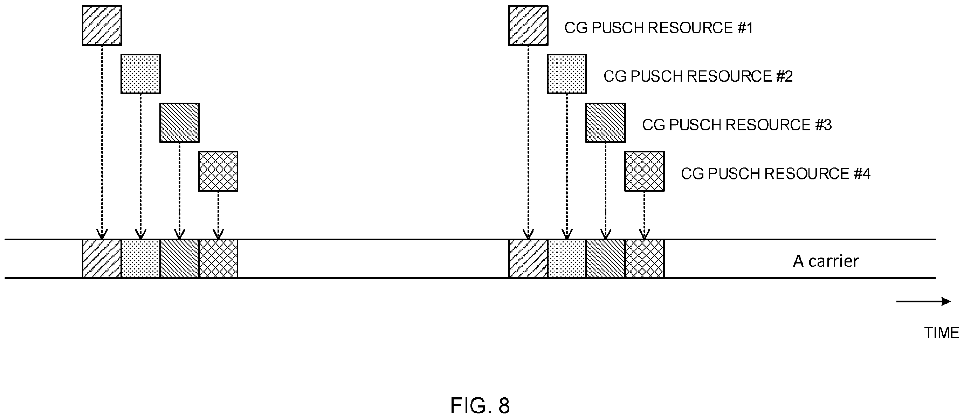

Further, for each PUSCH repetition based on the configured grant, different PUSCH resources (may be referred to as a PUSCH resource set) may be configured in the UE, respectively. For example, a configuration in which different PUSCH resources (CG PUSCH resources) are included respectively in CG configurations respectively associated with a given number of repetitions may be used (see Fig. 8) .

Fig. 8 shows a case where a plurality of PUSCH resources #1 to #4 are configured for a given carrier. Further, PUSCH resources #1 to #4 may be included in different CG configurations (for example, CG configurations #1 to #4), respectively. Fig. 8 shows a case where the PUSCH resources are configured in a time direction, but the plurality of PUSCH resources may be arranged in a frequency direction as shown in Fig. 1B.

Also, each PUSCH resource may be associated with a different TCI state. In this case, the UE can transmit the PUSCH to a plurality of TRPs using different PUSCH resources in repetitive transmission. Therefore, it is possible to flexibly configure the PUSCH resource used for PUSCH transmission to each TRP. Note that the same TCI state may be associated with some PUSCH resources.

Alternatively, a configuration in which the configured grant-based PUSCH repetitive transmission is performed by applying one CG configuration may be used. For example, when the configured grant-based repetitive transmission is performed using the number K of repetitions, the K repetitive transmissions are performed by applying a given CG configuration.

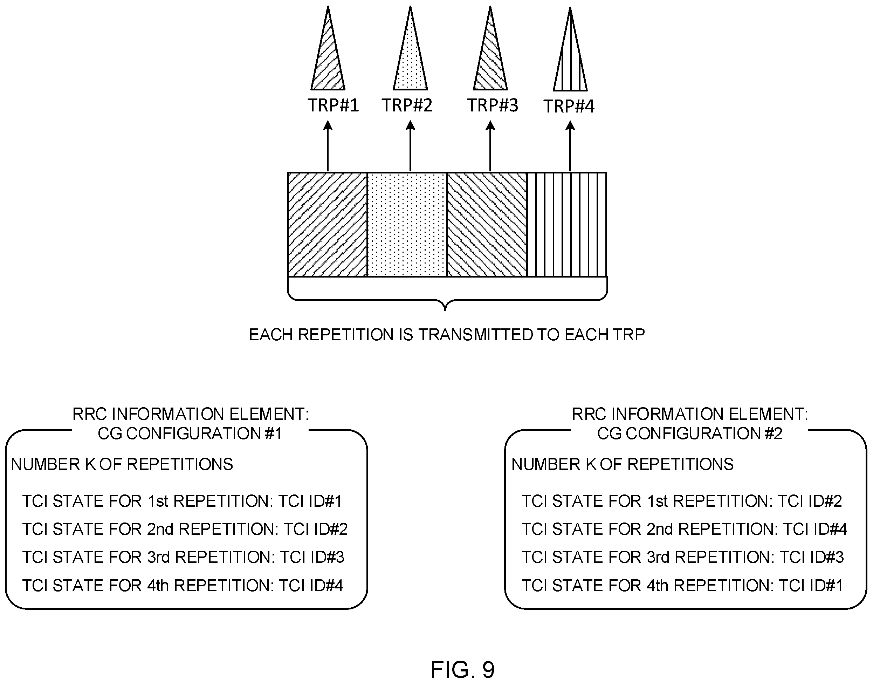

The base station may configure a plurality of CG configurations in the UE for at least one of a given carrier and a bandwidth part (BWP). Further, each CG configuration may be configured to include a repetition factor K and information regarding a TCI state for each repetition of PUSCH repetition transmission (see Fig. 9).

Fig. 9 shows a case where a repetition factor K and information of a TCI state corresponding to each repetition are included in each of CG configuration #1 and CG configuration #2 configured in the UE. For example, a case where in CG configuration #1, a TCI state of 1st repetitive transmission corresponds to TCI index #1, a TCI state of 2nd repetitive transmission corresponds to TCI index #2, a TCI state of 3rd repetitive transmission corresponds to TCI index #3, and a TCI state of 4th repetitive transmission corresponds to TCI index #4 is shown.

The UE performs transmission processing assuming a different TCI state for each repetition, when performing repetitive transmission using CG configuration #1.

The repetition factors (numbers of repetitions) included in each CG configuration may be the same as each other or may be different from each other. Further, the base station may configure (or activate) a plurality of CG configurations in the UE. For example, when CG configuration #1 and CG configuration #2 are configured (or activated), the UE may perform repetitive transmission of the PUSCH using CG configuration #1 and repetitive transmission of the PUSCH using CG configuration #2 respectively.

In this way, when repetitively transmitting the PUSCH based on the configured grant, by configuring the plurality of CG configurations respectively associated with the given TCI states in the UE, it is possible to appropriately perform the repetitive transmission of the PUSCH using the plurality of CG configurations.

### (Radio Communication System)

Hereinafter, a structure of a radio communication system according to one embodiment of the present invention will be described. In this radio communication system, communication is performed using one or a combination of the radio communication methods according to the herein-contained embodiments of the present invention described above.

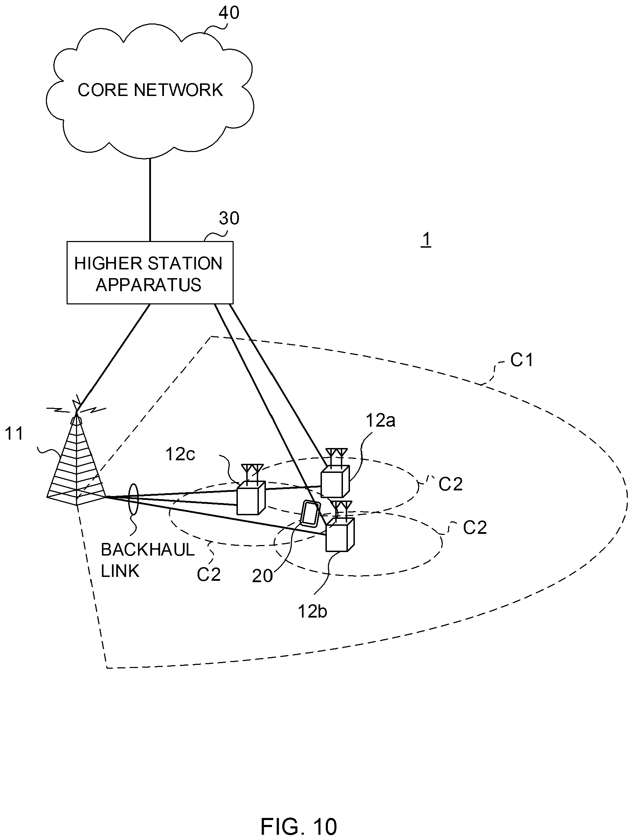

Fig. 10 is a diagram to show an example of a schematic structure of the radio communication system according to one embodiment of the present invention. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and so on of each cell and user terminal 20 are by no means limited to those shown in the drawings.

The user terminals 20 can connect with both the radio base station 11 and the radio base stations 12. It is assumed that the user terminals 20 use the macro cell C1 and the small cells C2 at the same time by means of CA or DC. Furthermore, the user terminals 20 may apply CA or DC using a plurality of cells (CCs) (for example, five or less CCs or six or more CCs).

Between the user terminals 20 and the radio base station 11, communication can be carried out by using a carrier of a relatively low frequency band (for example, 2 GHz) and a narrow bandwidth (referred to as an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

A wired connection (for example, an optical fiber in compliance with the CPRI (Common Public Radio Interface), an X2 interface and so on) or a wireless connection may be established between the radio base station 11 and the radio base stations 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, an access gateway apparatus, a radio network controller (RNC), a mobility management entity (MME), and the like, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," an "central node," an "eNB (eNodeB)," a "transmission and reception point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmission and reception point" and so on. Hereinafter the radio base stations 11 and 12 will be collectively referred to as "radio base stations 10," unless specified otherwise.

Each of the user terminals 20 is a terminal that supports various communication schemes such as LTE, LTE-A and so on, and may include not only mobile communication terminals (mobile stations) but stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency band (subcarriers) and mapping data to each subcarrier. SC-FDMA is a single-carrier communication scheme to mitigate interference between terminals by dividing the system bandwidth into bands including one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel)), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks), and so on are communicated on the PDSCH. In addition, the MIB (Master Information Block) is communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on, are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Delivery acknowledgment information (also referred to as, for example, "retransmission control information," "HARQ-ACKs," "ACK/NACKs," etc.) of HARQ (Hybrid Automatic Repeat reQuest) in response to the PUSCH is transmitted on the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. Also, radio quality information (CQI (Channel Quality Indicator)) of the downlink, delivery acknowledgment information, scheduling requests (SRs), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. Also, in the radio communication system 1, a measurement reference signal (SRS (Sounding Reference Signals), a demodulation reference signal (DMRS), and so on are transmitted as uplink reference signals. Note that, DMRS may be referred to as a "user terminal-specific reference signal (UE-specific Reference Signals)." Also, transmitted reference signals are by no means limited to these.

### <Radio Base Station>

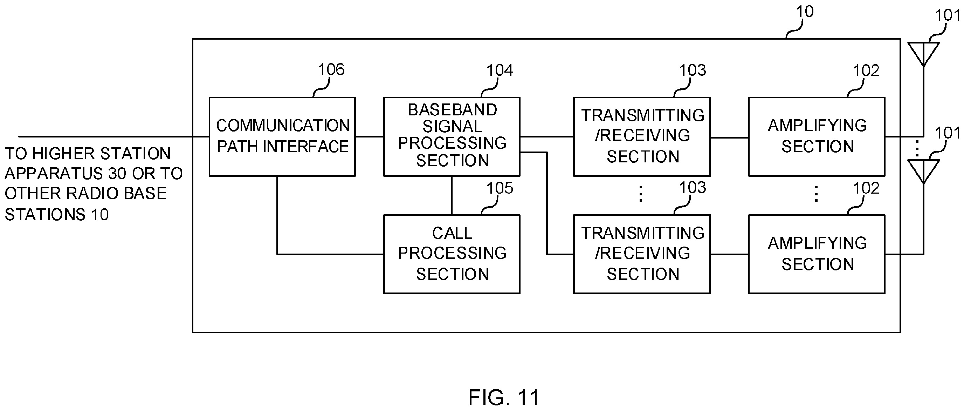

Fig. 11 is a diagram to show an example of an overall structure of the radio base station according to one embodiment of the present invention. A radio base station 10 includes a plurality of transmitting/receiving antennas 101, amplifying sections 102, transmitting/receiving sections 103, a baseband signal processing section 104, a call processing section 105 and a communication path interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. Each transmitting/receiving section 103 can be configured by transmitter/receiver, transmitting/receiving circuit or transmitting/receiving apparatus that can be described based on general understanding of the technical field to which the present invention pertains. Note that each transmitting/receiving section 103 may be structured as a transmitting/receiving section in one entity, or may be configured by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the radio base station 10, manages the radio resources and so on.

The communication path interface 106 transmits and receives signals to and from the higher station apparatus 30 via a certain interface. Also, the communication path interface 106 may transmit and receive signals (backhaul signaling) with other radio base stations 10 via an inter-base station interface (for example, an optical fiber in compliance with the CPRI(Common Public Radio Interface), the X2 interface, etc.).

Also, the transmitting/receiving sections 103 receive the PUSCH repetitively transmitted from the user terminal 20. Also, the transmitting/receiving sections 103 may transmit information regarding at least one of a quasi co-location, a transmission configuration indication (TCI) state, a sounding reference signal indicator (SRI), and spatial relation information, which corresponds to a repetition or a redundancy version of the PUSCH.

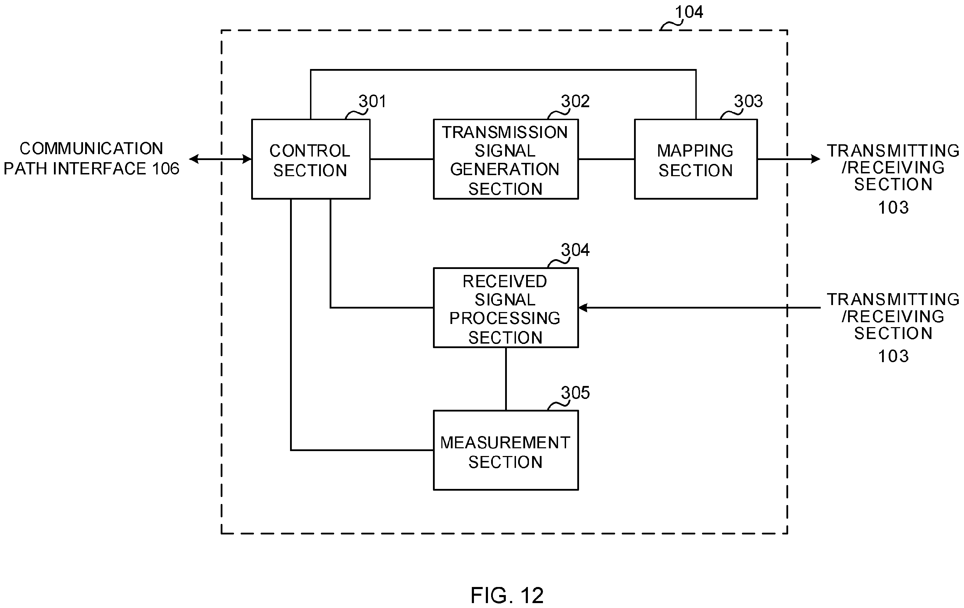

Fig. 12 is a diagram to show an example of a functional structure of a radio base station according to the present embodiment. Note that, the present example primarily shows functional blocks that pertain to characteristic parts of the present embodiment, and it is assumed that the radio base station 10 includes other functional blocks that are necessary for radio communication as well.

The baseband signal processing section 104 at least includes a control section (scheduler) 301, a transmission signal generation section 302, a mapping section 303, a received signal processing section 304 and a measurement section 305. Note that these structures may be included in the radio base station 10, and some or all of the structures do not need to be included in the baseband signal processing section 104.

The control section (scheduler) 301 controls the whole of the radio base station 10. The control section 301 can be configured by a controller, a control circuit or control apparatus that can be described based on general understanding of the technical field to which the present invention pertains.

The control section 301, for example, controls the generation of signals in the transmission signal generation section 302, the mapping of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of system information, a downlink data signal (for example, a signal transmitted on the PDSCH), and a downlink control signal (for example, a signal transmitted on the PDCCH and/or the EPDCCH, such as delivery acknowledgement information). Scheduling (e.g., resource allocation) of delivery confirmation information). Based on the results of determining necessity or not of retransmission control to the uplink data signal, or the like, the control section 301 controls generation of downlink control signal, downlink data signal, and so on. Further, the control section 301 controls the scheduling of a synchronization signal (for example, the PSS (Primary Synchronization Signal)/SSS (Secondary Synchronization Signal)), a downlink reference signal (for example, the CRS, the CSI-RS, the DM-RS, etc.) and so on.

Further, the control section 301 controls the scheduling of an uplink data signal (for example, a signal transmitted on the PUSCH), an uplink control signal (for example, a signal transmitted on the PUCCH and/or the PUSCH, delivery acknowledgment information, and so on), a random access preambles (for example, a signal transmitted on the PRACH), an uplink reference signal, and so on.

Also, the control section 301 may configure at least one of the quasi co-location, the transmission configuration indication (TCI) state, the sounding reference signal indicator (SRI), and the spatial relation information, for the repetition or the redundancy version of the PUSCH transmitted by the user terminal 20.

The transmission signal generation section 302 generates downlink signals (downlink control signals, downlink data signals, downlink reference signals and so on) based on commands from the control section 301, and outputs the downlink signals to the mapping section 303. The transmission signal generation section 302 can be configured by a signal generator, a signal generation circuit or signal generation apparatus that can be described based on general understanding of the technical field to which the present invention pertains.

For example, the transmission signal generation section 302 generates DL assignment to report downlink data allocation information, and/or UL grant to report uplink data allocation information, based on commands from the control section 301. The DL assignment and UL grant are both DCI, and follow the DCI format. Further, for a downlink data signal, encoding processing and modulation processing are performed in accordance with a coding rate modulation scheme or the like determined based on channel state information (CSI) and so on from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be configured by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals that are transmitted from the user terminals 20 (uplink control signals, uplink data signals, uplink reference signals, and so on). The received signal processing section 304 can be configured by a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. Further, the received signal processing section 304 outputs the received signals and/or the signals after the receiving processes to the measurement section 305.

The measurement section 305 conducts measurements with respect to the received signals. The measurement section 305 can be configured by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio)), a signal strength (for example, RSSI (Received Signal Strength Indicator)), transmission path information (for example, CSI), and so on. The measurement results may be output to the control section 301.

### (User Terminal)

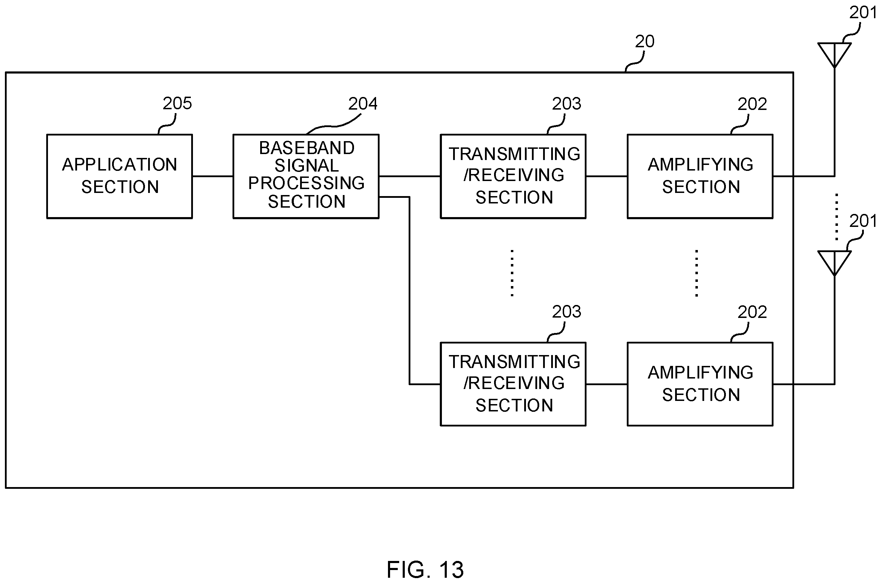

Fig. 13 is a diagram to show an example of an overall structure of a user terminal according to one embodiment of the present invention. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. Each transmitting/receiving section 203 can be configured by transmitter/receiver, transmitting/receiving circuit, or transmitting/receiving apparatus that can be described based on general understanding of the technical field to which the present invention pertains. Note that each transmitting/receiving section 203 may be structured as a transmitting/receiving section in one entity, or may be configured by a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

Further, the transmitting/receiving sections 203 transmit an uplink shared channel to one or more transmission and reception points per given number of repetitions. Also, the transmitting/receiving sections 203 may receive information regarding at least one of the quasi co-location, the transmission configuration indication (TCI) state, the sounding reference signal indicator (SRI), and the spatial relation information, which corresponds to the repetition or the redundancy version of the PUSCH.

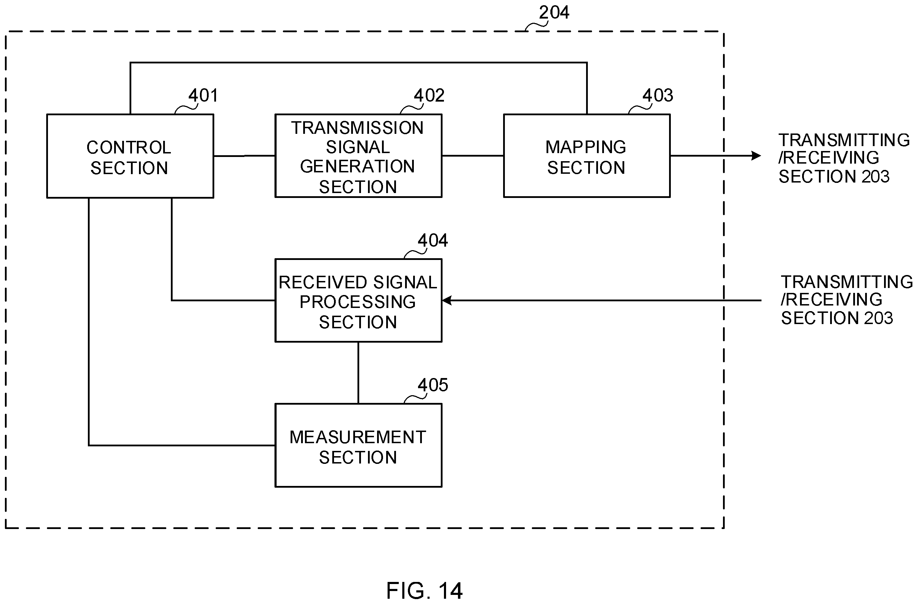

Fig. 14 is a diagram to show an example of a functional structure of a user terminal according to the present embodiment. Note that, the present example primarily shows functional blocks that pertain to characteristic parts of the present embodiment, and it is assumed the user terminal 20 includes other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be configured by a controller, a control circuit or control apparatus that can be described based on general understanding of the technical field to which the present invention pertains.

The control section 401, for example, controls the generation of signals in the transmission signal generation section 402, the mapping of signals by the mapping section 403, and so on. Furthermore, the control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

Also, the control section 401 controls repetitive transmission of the uplink shared channel based on at least one of a quasi co-location, a transmission configuration indication (TCI) state, a sounding reference signal indicator (SRI), and spatial relation information, which corresponds to the given number of repetitions or a redundancy version of the uplink shared channel. For example, a given repetition index or a given redundancy version index may be associated with at least one of a given TCI index, SRI index, and a given spatial relation information index.

Further, the control section 401 may perform repetitive transmission of the uplink shared channel using a plurality of configurations for configured grant-based transmission, when performing the configured grant-based transmission that performs transmission of the uplink shared channel without scheduling by downlink control information. Alternatively, the control section 401 may perform repetitive transmission of the uplink shared channel using a plurality of uplink shared channel resources in which at least one of a quasi co-location, a TCI state, an SRI, and spatial relation information is different, when performing the configured grant-based transmission.

Alternatively, the control section 401 may perform repetitive transmission of the uplink shared channel using one configuration for configured grant-based transmission in which at least one of a given quasi co-location, TCI state, SRI, and spatial relation information for each repetition is configured, when performing the configured grant-based transmission.

The transmission signal generation section 402 generates uplink signals (uplink control signals, uplink data signals, uplink reference signals, and so on) based on commands from the control section 401, and outputs the uplink signals to the mapping section 403. The transmission signal generation section 402 can be configured by a signal generator, a signal generation circuit or signal generation apparatus that can be described based on general understanding of the technical field to which the present invention pertains.

For example, the transmission signal generation section 402 generates an uplink control signal regarding delivery acknowledgement information, channel state information (CSI) and so on, based on commands from the control section 401. Further, the transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources based on commands from the control section 401, and outputs the result to the transmitting/receiving sections 203. The mapping section 403 can be configured by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals are, for example, downlink signals (downlink control signals, downlink data signals, downlink reference signals, and so on) that are transmitted from the radio base station 10. The received signal processing section 404 can be configured by a signal processor, a signal processing circuit or signal processing apparatus that can be described based on general understanding of the technical field to which the present invention pertains. Further, the received signal processing section 404 can constitute the receiving section according to the present invention.

The received signal processing section 404 outputs the decoded information acquired through the receiving processes to the control section 401. The received signal processing section 404 outputs, for example, broadcast information, system information, RRC signaling, DCI and so on, to the control section 401. Further, the received signal processing section 404 outputs the received signals and/or the signals after the receiving processes to the measurement section 405.

The measurement section 405 conducts measurements with respect to the received signals. The measurement section 405 can be configured by a measurer, a measurement circuit or measurement apparatus that can be described based on general understanding of the technical field to which the present invention pertains.

For example, the measurement section 405 may perform RRM measurement, CSI measurement, and so on, based on the received signal. The measurement section 405 may measure a received power (for example, RSRP), a received quality (for example, RSRQ and SINR), a signal strength (for example, RSSI), transmission path information (for example, CSI), and so on. The measurement results may be output to the control section 401.

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus.

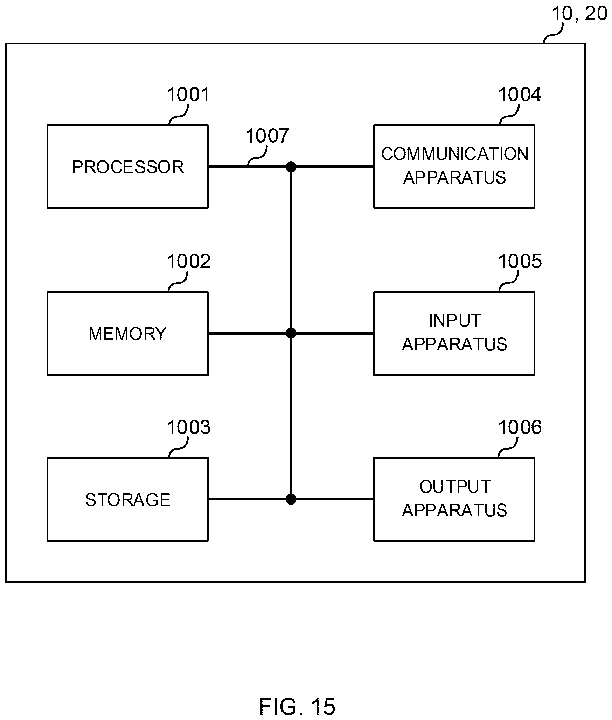

For example, the radio base station, the user terminal, and so on according to one embodiment of the present disclosure may function as a computer that executes the processes of the radio communication method of the present disclosure. Fig. 15 is a diagram to show an example of a hardware structure of the radio base station and the user terminal according to one embodiment. Physically, the above-described radio base station 10 and user terminals 20 may each be formed as a computer apparatus that includes a processor 1001, a memory 1002, a storage 1003, communication apparatus 1004, input apparatus 1005, output apparatus 1006, a bus 1007, and so on.

Note that, in the following description, the word "apparatus" may be interpreted as "circuit," "device," "unit," and so on. The hardware structure of the radio base station 10 and the user terminal 20 may be designed to include one or a plurality of apparatus shown in the drawings, or may be designed not to include part of the apparatus.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured by a central processing unit (CPU), which includes interfaces with peripheral equipment, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations described in the above-described embodiments are used. For example, the control section 401 of the user terminal 20 may be implemented by control programs that are stored in the memory 1002 and that operate on the processor 1001, and other functional blocks may be implemented likewise.

The memory 1002 is a computer-readable recording medium, and may be formed by, for example, at least one of a ROM (Read Only Memory), an EPROM (Erasable Programmable ROM), an EEPROM (Electrically EPROM), a RAM (Random Access Memory) and other appropriate storage media. The memory 1002 may be referred to as a "register," a "cache," a "main memory (primary storage device)" and so on. The memory 1002 can store executable program (program code), software module, and the like for implementing the radio communication method according to the embodiment of the present disclosure.

The storage 1003 is a computer-readable recording medium, and may be formed by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of a wired network and a wireless network, and is referred to as a "network device", a "network controller", a "network card", a "communication module", and so on. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device for receiving that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002, and so on are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, at least one of "channels" and "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, the numerology may be a communication parameter applied to at least one of transmission and reception of a certain signal or channel. For example, the numerology may indicate at least one of, a subcarrier spacing (SCS), a bandwidth, a symbol length, a cyclic prefix length, a transmission time interval (TTI), the number of symbols per TTI, a radio frame configuration, a specific filtering processing performed by a transceiver in the frequency domain, a specific windowing processing performed by the transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Further, a slot may be a time unit based on numerology.

A slot may include a plurality of mini-slots. Each mini-slot may be constituted of one or a plurality of symbols in the time domain. Further, a mini-slot may be referred to as a "subslot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot and a symbol all represent the time unit in signal communication. A radio frame, a subframe, a slot, a mini-slot, and a symbol may each be called by other applicable terms. Note that time units such as a frame, a subframe, a slot, a mini-slot, and a symbol in the present disclosure may be interchangeably interpreted.

For example, one subframe may be referred to as a "transmission time interval (TTI)," a plurality of consecutive subframes may be referred to as a "TTI," or one slot or one mini-slot may be referred to as a "TTI". That is, at least one of a subframe and a TTI may be a subframe (1 ms) in the existing LTE, may be a shorter period than 1 ms (for example, one to thirteen symbols), or may be a longer period of time than 1 ms. Note that a unit to represent a TTI may be referred to as a "slot," a "mini-slot," and so on instead of a "subframe".

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminals in TTI units. Note that the definition of TTIs is not limited to this.

The TTI may be the transmission time unit for channel-encoded data packets (transport blocks), code blocks, codewords and so on, or may be the unit of processing in scheduling, link adaptation and so on. Note that, when TTI is given, a time interval (for example, the number of symbols) to which the transport blocks, the code blocks, the codewords, and so on are actually mapped may be shorter than TTI.

Note that, in the case where one slot or one mini-slot is referred to as a "TTI," one or more TTIs (that is, one or more slots or one or more mini-slots) may be the minimum time unit of scheduling. Further, the number of slots (the number of mini-slots) constituting the minimum time unit of the scheduling may be controlled.

TTI having a time length of 1 ms may be called usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "mini-slot", "sub-slot", "slot", or the like.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and, for example, may be 12. The number of subcarriers included in an RB may be determined based on numerology.

Also, an RB may include one or a plurality of symbols in the time domain, and may be one slot, one mini-slot, one subframe or one TTI in length. One TTI, one subframe, and so on each may be constituted of one or a plurality of resource blocks.

Note that one or a plurality of RBs may be referred to as a "physical resource block (PRB (Physical RB))," a "subcarrier group (SCG)," a "resource element group (REG)," a "PRB pair," an "RB pair" and so on.

Furthermore, a resource block may be constituted of one or a plurality of resource elements (REs). For example, one RE may be a radio resource field of one subcarrier and one symbol.

A Bandwidth Part (BWP) (which may be referred to as a partial bandwidth, and so on) may represent a subset of continuous common resource blocks (RBs) for certain numerology in a certain carrier. Here, the common RB may be specified by an index of RBs based on a common reference point of the carrier. A PRB may be defined in a certain BWP and be numbered within the BWP.

The BWP may include a BWP for the UL (UL BWP) and a BWP for the DL (DL BWP). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. Since various channels (PUCCH (Physical Uplink Control Channel), PDCCH (Physical Downlink Control Channel), and so on) and information elements can be identified by any suitable names, the various names assigned to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Further, information, signals, and so on can be output in at least one of from higher layers to lower layers and from lower layers to higher layers. Information, signals and so on may be input and/or output via a plurality of network nodes.

The information, signals, and so on that are input and/or output may be stored in a specific location (for example, a memory), or may be managed by using a management table. The information, signals, and so on that are input and/or output can be overwritten, updated, or appended. The information, signals, and so on that are output may be deleted. The information, signals and so on that are input may be transmitted to other pieces of apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs (Control Elements)).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode" or "hardware description language," or called by other terms, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information and so on may be transmitted and received via communication media. For example, when software is transmitted from a website, a server or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies is also included in the definition of communication media.

The terms "system" and "network" used in the present disclosure may be used interchangeably.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms such as "mobile station (MS)", "user terminal", "user equipment (UE)", and "terminal" may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other appropriate terms in some cases.

At least one of a base station and a mobile station may be referred to as a "transmitting apparatus," a "receiving apparatus," and so on. Note that at least one of a base station and a mobile station may be a device mounted on a mobile entity or a mobile entity itself, and so on. The mobile entity may be a vehicle (for example, a car, an airplane, and the like), may be a mobile entity which moves unmanned (for example, a drone, an automatic operation car, and the like), or may be a robot (a manned type or unmanned type). Note that at least one of a base station and a mobile station also includes an apparatus which does not necessarily move during communication operation.

Furthermore, the radio base station in the present disclosure may be interpreted as a user terminal. For example, each aspect/embodiment of the present disclosure may be applied to the structure that replaces a communication between a radio base station and a user terminal with a communication between a plurality of user terminals (for example, which may be referred to as "D2D (Device-to-Device)," "V2X (Vehicle-to-Everything)," and so on). In this case, the user terminals 20 may have the functions of the radio base stations 10 described above. In addition, the words "uplink" and "downlink" may be interpreted as the words corresponding to the terminal-to-terminal communication (for example, "side"). For example, an uplink channel, a downlink channel, and so on may be interpreted as a side channel.

Likewise, the user terminal in the present disclosure may be interpreted as a radio base station. In this case, the radio base stations 10 may have the functions of the user terminals 20 described above.

Actions which have been described in the present disclosure to be performed by a base station may, in some cases, be performed by their upper nodes. In a network including one or a plurality of network nodes with base stations, it is clear that various operations that are performed to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next generation systems that are enhanced based on these. Further, plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used in the present disclosure does not generally limit the number/quantity or order of these elements. These designations may be used in the present disclosure as a convenient way, for distinguishing between two or more elements. Thus, reference to the first and second elements does not imply that only two elements may be employed, or that the first element must precede the second element in some way.

The term "judging (determining)" as used in the present disclosure may encompass a wide variety of actions. For example, "judging (determining)" may be interpreted to mean making "judgments (determinations)" about judging, calculating, computing, processing, deriving, investigating, looking up (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgements (determinations)" related to some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables, printed electrical connections, and the like, and, as some non-limiting and non-inclusive examples, by using electromagnetic energy having wavelengths in radio frequency regions, microwave regions, (both visible and invisible) light regions, or the like.

In the present disclosure, the phrase "A and B are different" may mean that "A and B are different from each other." Note that the phrase may mean that "A and B are different from C". The terms "separate," "be coupled," and so on may be interpreted similarly to "different."

When terms such as "include," "including", and variations of these are used in the present disclosure, these terms are intended to be inclusive, in a manner similar to the way the term "comprising" is used. Furthermore, the term "or" as used in the present disclosure is intended to be not exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a transmitting section that transmits an uplink shared channel to one or more transmission and reception points per given number of repetitions; and
a control section that controls repetitive transmission of the uplink shared channel based on at least one of a quasi co-location, a transmission configuration indication (TCI) state, a sounding reference signal indicator (SRI), and
spatial relation information, which corresponds to the given number of repetitions or a redundancy version of the uplink shared channel.

2. The user terminal according to claim 1, wherein a given repetition index or a given redundancy version index is associated with at least one of a given TCI index, SRI index, and a given spatial relation information index.

3. The user terminal according to claim 1 or 2, wherein the control section performs the repetitive transmission of the uplink shared channel using a plurality of configurations for configured grant-based transmission, when performing the configured grant-based transmission that performs transmission of the uplink shared channel without scheduling by downlink control information.

4. The user terminal according to claim 1 or 2, wherein the control section performs the repetitive transmission of the uplink shared channel using a plurality of uplink shared channel resources in which at least one of the quasi co-location, the TCI state, the SRI, and the spatial relation information is different, when performing the configured grant-based transmission that performs transmission of the uplink shared channel without scheduling by downlink control information.

5. The user terminal according to claim 1 or 2, wherein the control section performs the repetitive transmission of the uplink shared channel using one configuration for configured grant-based transmission in which at least one of a given quasi co-location, TCI state, SRI, and spatial relation information for each repetition is configured, when performing the configured grant-based transmission that performs transmission of the uplink shared channel without scheduling by downlink control information.

6. A radio communication method of a user terminal, the method comprising the steps of:
transmitting an uplink shared channel to one or more transmission and reception points per given number of repetitions; and
controlling repetitive transmission of the uplink shared channel based on at least one of a quasi co-location, a transmission configuration indication (TCI) state, a sounding reference signal indicator (SRI), and spatial relation information corresponding to the given number of repetitions or a redundancy version of the uplink shared channel.
